(19) Europäisches Patentamt / European Patent Office / Office européen des brevets

(11) **EP 3 035 098 B1**

(12) **FASCICULE DE BREVET EUROPEEN**

(45) Date de publication et mention
de la délivrance du brevet:
**05.07.2017 Bulletin 2017/27**

(51) Int Cl.:
**G02B 6/44** *(2006.01)*

(21) Numéro de dépôt: **15201218.3**

(22) Date de dépôt: **18.12.2015**

(54) **DISPOSITIF DE DÉRIVATION D'UN CÂBLE OPTIQUE**

VERZWEIGUNGSVORRICHTUNG EINES OPTISCHEN KABELS

BRANCHING DEVICE FOR AN OPTICAL CABLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.12.2014 FR 1463017**

(43) Date de publication de la demande:
**22.06.2016 Bulletin 2016/25**

(73) Titulaire: **ACOME, Société Coopérative et
Participative,
Société Anonyme coopérative de production
à capital variable
75014 Paris (FR)**

(72) Inventeur: **LALLINEC, Patrice
50610 JULLOUVILLE (FR)**

(74) Mandataire: **Regimbeau
20, rue de Chazelles
75847 Paris Cedex 17 (FR)**

(56) Documents cités:
**EP-A1- 0 744 640          EP-A1- 2 169 438
WO-A1-2007/113522      WO-A1-2009/030277
GB-A- 2 312 758            JP-A- S63 194 203
US-A- 4 859 020            US-A1- 2007 189 694
US-A1- 2009 290 844**

**Description**

DOMAINE GENERAL

L'invention concerne un dispositif de dérivation d'un câble optique et un procédé de dérivation d'un câble optique.

ETAT DE LA TECHNIQUE

De façon conventionnelle, un câble optique comprend une gaine et une pluralité de modules optiques s'étendant à l'intérieur de la gaine. Chaque module optique comprend une ou plusieurs fibres optiques. Les modules optiques sont généralement assemblés entre eux.

Un module optique donné peut faire l'objet d'une dérivation, en vue de son raccordement à un terminal d'un abonné à un réseau.

Les modules optiques ne sont généralement extraits du câble qu'en ses extrémités.

Or, l'installation de câbles optiques en aérien se développe. Des câbles optiques installés en aérien sont posés tendus entre poteaux, chaque segment entre deux poteaux étant désigné sous le nom de « portée ». Plusieurs portées constituent généralement une liaison aérienne.

Par ailleurs, l'avènement du FTTH amène les opérateurs à vouloir extraire les modules fibres optiques ailleurs qu'en extrémité, typiquement au niveau d'un poteau où le câble est en passage.

On connait du document FR 2 810 747 un câble optique, dit « à accessibilité permanente », comprenant une gaine et des modules optiques s'étendant en long, c'est-à-dire parallèlement les uns aux autres à l'intérieur de la gaine. De plus, les modules sont disposés à l'intérieur de la gaine avec une surlongueur par rapport à la gaine. Lors de l'installation de ce câble, il est possible d'accéder de façon continue, c'est-à-dire à n'importe quel endroit du câble, aux modules optiques contenus dans la gaine. L'opération de dérivation consiste alors à découper une fenêtre de dérivation dans la gaine de protection à l'endroit choisi pour la dérivation, puis d'extraire une portion du module optique par la fenêtre de dérivation. Après dérivation, il est possible de refermer la fenêtre par fixation d'un couvercle sur la gaine du câble. Cette technique évite de réaliser un enlèvement complet de la gaine du câble sur une grande longueur. Elle évite également de devoir prévoir des zones d'enroulement du câble.

Cependant, ce type de câble à accessibilité permanente n'est pas utilisé dans des installations en aérien.

On précise qu'un câble aérien est sujet aux intempéries et à des variations climatiques qui génèrent une contraction et une dilatation de sa structure et notamment de sa gaine par rapport aux modules optique qu'elle renferme.

La demanderesse a constaté qu'en utilisation, un module optique extrait depuis un câble à accessibilité permanente, est progressivement consommé par le câble d'où il provient, au fur et à mesure des dilatations et contractions de la gaine.

Dans le cas initial de modules non dérivés et restés en câble, ces allongements et rétractations du câble suivent 4 grandes phases:

1. Une phase de consommation de surlongueur des modules optiques.
2. Une phase d'allongement élastique des modules optiques.
3. Une phase de relâchement de l'allongement élastique des modules optiques.
4. Une phase de régénération de la surlongueur des modules optiques.

Lors de la phase 1, les modules optiques présents dans le câble et solidaires de celui-ci passent d'un état ondulé « en surlongueur » à un état T0 tendu rectilignement, sans allongement.

Lors de la phase 2, les modules optiques passent de l'état tendu sans allongement T0 à un état allongé, jusqu'à atteindre des limites acceptables pour les fibres optiques (généralement 0.3% d'allongement des fibres optiques).

Lors de la phase 3, survient un relâchement de la tension sur le câble ; les modules optiques perdent alors leur allongement jusqu'à revenir à l'état T0 dans lequel ils sont tendus à peu près rectilignement.

Lors de la phase 4, les modules retrouvent leur ondulation initiale (leur surlongueur dans le câble).

Lorsque qu'un module est coupé pour dérivation en plein câble, et qu'il est extrait hors du câble par une fenêtre d'accès formée dans la gaine du câble, ce module est laissé libre de ses mouvements et a le comportement suivant.

Lors de la phase 1, le module libre extrait par la fenêtre de dérivation suit le mouvement des autres modules présents dans le câble et solidaires de celui-ci ; le module extrait passe de son état ondulé « en surlongueur » à l'état quasiment rectiligne sans allongement T0. A cet état T0, la longueur qui ressort de la fenêtre d'accès n'est que très peu modifiée. Il n'y a pas de consommation de module.

Lors de la phase 2, le module libre extrait ne s'allonge pas, il glisse à l'intérieur du câble le long des autres modules qui s'allongent. Il y a consommation de module, sur une longueur égale à l'allongement subi par chacun des autres modules solidaires du câble (généralement jusqu'à 0.3 %).

Ainsi, pour une portée de 40 mètres, quand les autres modules sont allongés de 0.3 %, la longueur du module libre qui ressort de la fenêtre de dérivation a diminué de 12 centimètres environ (la longueur consommée est égale à 12 centimètres environ).

Lors de la phase 3, le module libre extrait subit la rétractation du câble en se positionnant en surlongueur (ondulations), ayant ainsi acquis une surlongueur équivalente à l'allongement subi par les autres modules (jusqu'à 0.3% généralement). Dans cet état, la longueur du module qui ressort de la fenêtre ne change pas, le module ne ressort pas du câble.

Lors de la phase 4, le module libre continue à cumuler de la surlongueur dans le câble, l'équivalent de la surlongueur reprise par chacun des autres modules. A cet état, la longueur du module qui ressort de la fenêtre ne change pas ; la longueur consommée ne ressort alors pas du câble.

Au total, le module libre possède la surlongueur suivante :

$$Surlongueur\ module\ libre$$
$$= Surlongueur\ initiale\ autre\ module$$
$$+ allongement\ autre\ module$$

Ou encore :

$$Surlongueur\ module\ libre\ =\ allongement\ maximum\ subit\ par\ le\ câble$$

Or, la surlongueur générée sur le module dérivé (partie restée en câble) est néfaste à son bon fonctionnement.

La surlongueur initiale est définie lors de la conception du câble pour ne pas faire subir de contraintes de macro-courbure qui affaibliraient le signal optique et accélèreraient le vieillissement des fibres optiques. Si la surlongueur est excédentaire alors il y a création de macro courbure, du fait des ondulations rapprochées du module. Une solution utilisant un dispositif de protection basé sur des moyens de blocage comprenant un support d'enroulement pour les modules optiques extraits est connu de WO2007/113522. Une solution théorique à ces problèmes pourrait également consister à prévoir un excédent de longueur de câble géré en formant des boucles (ou « loves ») pour solidariser tous les éléments du câble, puis d'accéder aux modules à dériver dans une zone située au-delà des boucles.

Une telle solution présenterait cependant les désavantages d'être inesthétique et de requérir un excédent de longueur du câble.

RESUME DE L'INVENTION

Un but de l'invention est d'éviter un affaiblissement de signal dans un module optique dérivé d'un câble optique aérien à accessibilité permanente et un vieillissement accéléré d'un tel module, sans pour autant requérir un excédent de longueur du câble optique.

A cet effet il est proposé, selon un premier aspect de l'invention, un dispositif de dérivation pour un câble optique comprenant une gaine, au moins un module optique entouré par la gaine et une fenêtre d'accès au module optique formée dans la gaine, le dispositif comprenant :

- un boîtier présentant :

  ◦ un orifice d'entrée et un orifice de sortie agencés pour permettre une traversée du boîtier par le câble de sorte qu'une portion du câble comprenant la fenêtre d'accès se trouve logée à l'intérieur du boîtier,
  ◦ une interface de dérivation entre l'intérieur et l'extérieur du boîtier, agencée pour permettre une communication entre la portion du module qui a été extraite hors du câble via la fenêtre d'accès et un équipement externe au boîtier, et

- des moyens de blocage de la portion du module optique extraite par rapport à la gaine pour empêcher un déplacement de la portion du module extraite vers l'intérieur de la gaine.

Les moyens de blocage comprennent au moins un support d'enroulement de la portion du module optique extraite, et un organe formant une pince et agencé pour pincer la portion du module optique extraite.

Le blocage du module optique dérivé par rapport à la gaine du câble depuis lequel ce module est extrait, permet de conserver le comportement initial du module dérivé dans le câble.

A cet égard, la combinaison du support d'enroulement et de l'organe formant pince agencée en aval produit un effet synergique de cabestan, qui permet d'assurer un blocage particulièrement solide du module par rapport à la gaine du câble d'où il est extrait.

En effet, lorsque le module subit un effort de traction vers l'intérieur du câble, l'organe formant une pince agencé en aval du support d'enroulement retient le module qu'il pince ; ainsi, la portion du module enroulée autour du support d'enroulement se trouve plaquée au support d'enroulement. Une grande partie de cet effort de traction est ainsi absorbée par le support d'enroulement, si bien que seule une faible partie de l'effort de traction est transféré à l'organe formant une pince.

Sans l'utilisation de l'organe formant une pince en aval du support, le module extrait devrait être enroulée autour du support d'enroulement sur une très grande surface de contact pour éviter que le module ne glisse par rapport au support d'enroulement.

L'utilisation de l'organe formant une pince en aval du support permet donc à la fois de rendre plus solide le blocage par rapport au support d'enroulement seul, et de diminuer le nombre de tours d'enroulement du module autour du support d'enroulement. L'installation du module en position bloquée par un opérateur est donc significativement raccourcie.

Par ailleurs, comme seule une faible partie de l'effort de traction est transférée à l'organe formant une pince agencé en aval du support d'enroulement, la force de pincement nécessaire pour bloquer le module au moyen de l'organe formant pince l'est tout autant. Ceci a plusieurs avantages : les contraintes de fabrication de cet organe formant une pince sont considérablement réduites, et l'effort réduit de pincement évite tout risques de détérioration du module optique.

Ainsi, grâce aux moyens de blocage, lorsque le câble optique contient plusieurs modules optiques dont au moins un en passage, le module optique dérivé suit un même comportement que les autres modules du câble en passage.

Autrement dit, la position du module extrait du câble est figée par rapport à la gaine du câble, ce module dérivé subit les mêmes contraintes d'allongement que les autres modules, dans sa partie utile restée à l'intérieur du câble.

Le dispositif selon ce premier aspect de l'invention peut être complété par les caractéristiques suivantes, prises seules ou bien en combinaison lorsque cela est techniquement possible.

Le dispositif de dérivation comprend en outre des moyens de fixation du câble par rapport au boîtier, et dans lequel le support d'enroulement et l'organe formant une pince sont fixes par rapport au boîtier.

Le support d'enroulement présente une surface d'enroulement depuis laquelle l'organe formant une pince fait saillie.

L'organe formant une pince présente une surface de pinçage en regard d'une surface d'enroulement du support d'enroulement, l'organe formant pince étant agencé par rapport au support d'enroulement de sorte que la portion du module enroulée autour du support d'enroulement soit pincée entre la surface d'enroulement et la surface de pinçage.

L'élément présente une surface de pincement réalisée en mousse ou en feutre.

L'interface de dérivation comprend un orifice de dérivation agencé pour faire ressortir du boîtier la portion du module qui a été extraite, ou bien pour faire ressortir du boîtier un autre module optique auquel la portion du module extraite a été raccordée.

L'organe formant une pince est disposé en amont de l'interface de dérivation, par exemple entre le support d'enroulement et l'orifice de dérivation.

L'organe formant pince comprend un canal pour recevoir le module à pincer, le canal étant orienté tangentiellement à une surface d'enroulement du support d'enroulement.

Le support d'enroulement présente une forme de révolution.

Le support d'enroulement présente une surface d'enroulement formée au moins partiellement d'élastomère.

Le support d'enroulement présente une surface d'enroulement positionnée par rapport aux orifices d'entrée et de sortie de façon à être tangente à l'intérieur de la gaine de la portion de câble logée dans le boîtier.

L'orifice d'entrée et l'orifice de sortie sont coaxiaux.

Les moyens de blocage sont localisés à l'intérieur du boîtier.

Le dispositif de dérivation comprend un élément de guidage de la portion de module extraite vers le support d'enroulement, l'élément de guidage présentant une surface de guidage courbe qui est positionnée par rapport aux orifices d'entrée et de sortie de façon à être tangente à l'intérieur de la gaine de la portion de câble logée dans le boîtier.

Il est également proposé, selon un deuxième aspect de l'invention, un système comprenant :

- un dispositif de dérivation selon le premier aspect de l'invention, et
- un câble optique comprenant une gaine, un module optique entouré par la gaine et une fenêtre d'accès au module optique formée dans la gaine,

dans lequel le câble traverse le boîtier via les orifices d'entrée et de sortie, une portion du câble comprenant la fenêtre d'accès étant logée dans le boîtier.

Le système selon ce deuxième aspect de l'invention peut être complété par les caractéristiques suivantes, prises seules ou bien en combinaison lorsque cela est techniquement possible.

La portion du module optique qui a été extraite comprend un connecteur optique de raccordement avec un autre module optique.

Le système comprend un autre module optique, et au moins une fibre optique de la portion de module optique extraite est raccordée par épissurage avec au moins une fibre optique de l'autre module optique.

Le câble comprend une pluralité de modules optiques s'étendant en long.

Le module optique est enroulé autour du support d'enroulement consécutivement sur au moins un tour, préférentiellement sur trois tours.

Le module optique est enroulé autour du support d'enroulement sans se chevaucher lui-même.

Il est en outre proposé, selon un troisième aspect de l'invention, un procédé de dérivation pour un câble optique comprenant une gaine, un module optique entouré par la gaine et une fenêtre d'accès au module optique formée dans la gaine, au moyen d'un dispositif de dérivation comprenant un boîtier, le procédé comprenant des étapes de:

- faire traverser le boîtier du dispositif par le câble via des orifices d'entrée et de sortie du boîtier, de sorte qu'une portion du câble comprenant la fenêtre d'accès se trouve logée dans le boîtier,
- extraire une portion du module optique hors du câble via la fenêtre d'accès, et
- bloquer la portion du module optique extraite par rapport à la gaine pour empêcher un déplacement de la portion du module extraite vers l'intérieur de la gaine, le blocage comprenant :

  o l'enroulement de la portion du module extraite autour d'un support d'enroulement, et
  o le pincement, au moyen d'un organe formant une pince, de la portion du module enroulée autour du support d'enroulement ou d'une portion du module en aval de la portion enroulée.

Le procédé selon ce troisième aspect de l'invention peut être complété par les caractéristiques suivantes, prises seules ou bien en combinaison lorsque cela est techniquement possible.

Le procédé peut comprendre un raccordement de la portion du module optique extraite avec un équipement externe au boîtier.

La portion du module qui a été extraite, ou bien un autre module optique auquel la portion du module extraite, a été raccordée peut être passé à travers un orifice de dérivation du dispositif.

Au moins une fibre optique de la portion de module optique extraite peut être raccordée par épissurage à au moins une fibre optique d'un autre module optique.

Le câble optique étant un câble aérien, le procédé de dérivation peut comprendre une fixation du boîtier à un poteau.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 est une vue en perspective d'un dispositif de dérivation selon un mode de réalisation dans un état ouvert.

- La figure 2 est une vue en perspective du dispositif de dérivation illustré sur la figure 1, dans un état fermé.

- La figure 3 est une vue en perspective de moyens de blocage pour un dispositif de dérivation selon un deuxième mode de réalisation de l'invention.

- La figure 4 est une vue en perspective de moyens de blocage pour un dispositif de dérivation selon un troisième mode de réalisation de l'invention.

Sur l'ensemble des figures, les éléments similaires portent des références identiques.

## DESCRIPTION DETAILLEE DE MODES DE REALISATIONS

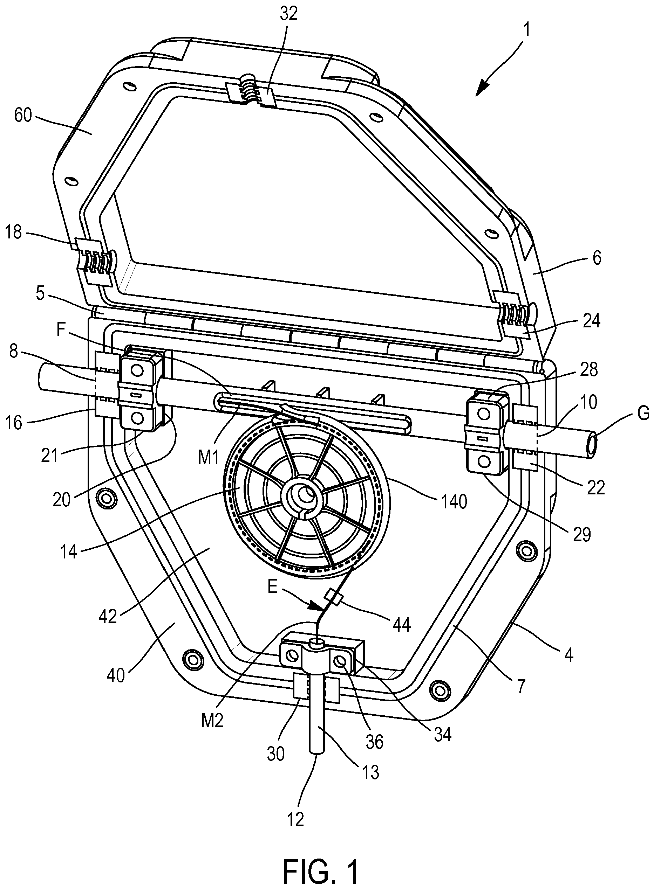

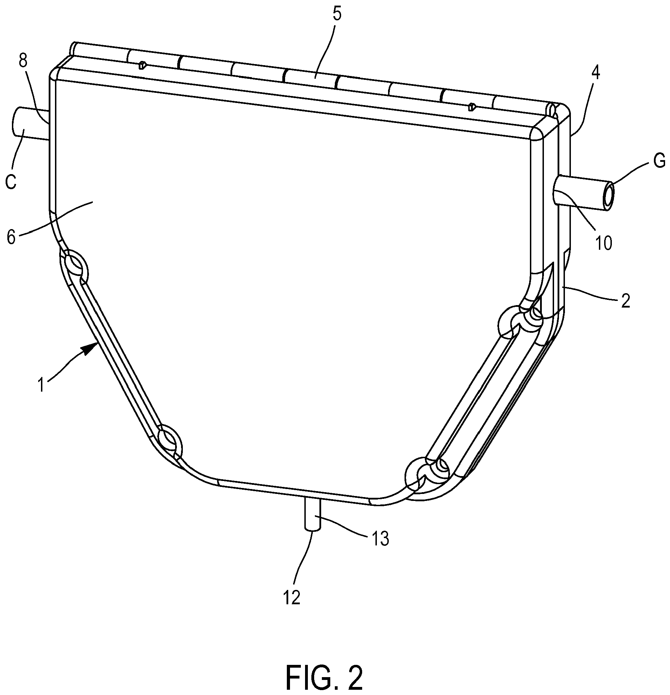

En référence aux figures 1 et 2, un dispositif 1 de dérivation d'un câble optique C comprend un boitier 2.

Dans la suite, on prendra l'exemple d'un câble C, dont seule une portion est illustrée sur la figure 1, comprenant une gaine G, et une pluralité de modules optiques entourée par la gaine. Les modules optiques s'étendent en long, sensiblement parallèlement les uns aux autres dans le câble C non représentés sur la figure 1.

Chaque module optique renferme une ou plusieurs fibres optiques.

Une fenêtre d'accès F aux modules est formée dans la gaine G du câble C, sur une longueur limitée. Cette fenêtre F est prévue pour la dérivation d'un ou plusieurs des modules optiques contenus dans le câble C.

Le boîtier 2 comprend une base 4 et un couvercle 6 mobile en rotation par rapport à la base 4, au moyen d'une liaison 5 telle qu'une charnière.

La base 4 et le couvercle 6 présentent des formes sensiblement identiques, ici une forme globalement trapézoïdale.

Sur la figure 1, le boîtier est représenté dans une position ouverte : la base 4 et le couvercle 6 sont positionnés à distance l'un de l'autre.

Le boîtier 2 définit un logement interne accessible par un opérateur lorsque le boîtier est dans sa position ouverte.

Le boîtier 2 comprend deux orifices 8 et 10 d'accès au logement interne du boîtier 2.

Les deux orifices 8 et 10 sont formés dans deux parois opposés du boîtier ; ils sont coaxiaux, c'est-à-dire agencés en vis-à-vis et alignés, et présentent un diamètre identique prévu pour coïncider avec le diamètre d'un câble C partiellement représenté sur la figure 1. Le câble C peut de la sorte traverser le boîtier 2 via les deux orifices 8 et 10 selon une trajectoire sensiblement rectiligne, sans déformation excessive.

La largeur du logement interne du boîtier, mesurée entre les deux orifices 8 et 10, est prévue suffisante pour que la fenêtre d'accès définie dans la gaine du câble C puisse être entièrement logée dans le logement interne du boîtier lorsque le câble C traverse le boîtier par ces deux orifices 8 et 10.

Le boîtier 2 comprend par ailleurs un orifice de dérivation 12, permettant d'accéder également au logement interne du boîtier 2.

L'orifice de dérivation 12 est de diamètre inférieur au diamètre des orifices ; l'orifice de dérivation 12 est en effet prévu pour faire ressortir du boîtier au moins un module optique, qui est de diamètre plus petit que le diamètre de la gaine du câble C.

L'orifice de dérivation 12 est formé dans une paroi inférieure du boîtier 2 qui est perpendiculaire aux parois latérales dans lesquelles les orifices 8 et 10 sont formés.

Chacun des trois orifices 8, 10 et 12 constitue une interface entre l'extérieur du boîtier et le logement interne du boîtier.

La base 4 comprend une surface 40 prévue pour être positionné contre une surface 60 complémentaire du couvercle 6 pour fermer le boîtier 2.

Les orifices 8, 10 et 12 sont chacun défini partiellement dans la surface 40 de la base 4 et partiellement dans la surface 60 du couvercle 6. Ces mêmes orifices 8, 10, 12 sont formés totalement lorsque le boîtier est fermé, c'est-à-dire lorsque les deux surfaces 40, 60 complémentaires de la base 4 et du couvercle 6 sont positionnées l'une contre l'autre. Cette position fermée du boîtier est représentée en figure 2.

De retour à la figure 1, Le dispositif 1 comprend des moyens de blocage pour bloquer une portion d'un module optique M1 préalablement extraite hors du câble C, par rapport à la gaine G du même câble C. Les moyens de blocage permettent ainsi d'empêcher un déplacement de la portion du module extraite vers l'intérieur de la gaine G.

Les moyens de blocage comprennent un support d'enroulement 14 lequel est fixé à la base 4. Le support d'enroulement 14 fait saillie depuis une face interne 42 de la base 4 qui définit en partie le logement interne du boîtier 2.

Le support d'enroulement 14 est centré dans une zone triangulaire délimitée par les trois orifices 8, 10 et 12.

Le support d'enroulement 14 est par exemple équidistant des deux orifices opposés 8 et 10.

Le support d'enroulement 14 présente une surface d'enroulement 140 sur laquelle peut être enroulée une portion de module optique M1 extraite hors du câble via la fenêtre F, lorsque ce câble C traverse le boîtier 2 et que la fenêtre F est confinée dans le logement interne du boîtier 2.

Ainsi lorsque le module M1 partiellement extrait hors du câble C se trouve enroulé autour du support d'enroulement 14, ce module M1 est maintenu fixe par rapport à la base 4 du boîtier 2.

Le support d'enroulement 14 présente une forme de révolution, de préférence sans arête vive afin d'éviter toute blessure du module optique enroulé autour du support 14. Le support d'enroulement 14 illustré est par exemple de profil circulaire.

Le support d'enroulement est rigide et peut être réalisé en matière métallique ou plastique ou autre.

Sa surface d'enroulement 140 peut être formée d'un élastomère tel que du caoutchouc. Cet élastomère permet à un module enroulé de bien adhérer à la surface d'enroulement, limitant ainsi substantiellement un glissement du module M1 le long de la surface d'enroulement 140.

Par ailleurs, le support d'enroulement 14 est positionné de façon à ce que la surface d'enroulement 140 coupe la trajectoire du câble définie par les orifices 8 et 10.

La surface d'enroulement 140 est plus précisément positionnée de façon à ce que, lorsque le câble C traverse le boîtier via les orifices 8 et 10, cette surface 140 puisse partiellement pénétrer dans le câble C au niveau de la fenêtre d'accès F, et être tangente à l'intérieur de la gaine.

De la sorte, un module optique du câble C peut être enroulé autour du support d'enroulement 14 sans déformation excessive au niveau de la fenêtre d'accès F.

En variante (non illustrée), le dispositif 1 comprend un élément de guidage de la portion de module extraite vers le support d'enroulement, constituant une pièce indépendante ou non du support d'enroulement 14. L'élément de guidage présente une surface de guidage courbe qui est positionnée par rapport aux orifices d'entrée 8 et de sortie 10 de façon à être tangente à l'intérieur de la gaine G de la portion de câble logée dans le boîtier 2. Un organe de guidage ainsi positionné permet, outre le fait d'éviter une déformation excessive du module optique au niveau de la fenêtre d'accès F, de positionner librement le support d'enroulement 14 dans le boîtier 2.

Le support d'enroulement 14 est de préférence prévu pour respecter un rayon minimum de courbure requis pour des fibres optiques, généralement 30 millimètres sur les fibres monomodes G652, ou 15 milliètres ou moins sur les fibres G657. Le support d'enroulement présente ainsi de préférence un diamètre de 60 millimètres.

L'épaisseur de la surface d'enroulement 140, mesurée selon un axe normal à la face interne 42 de la base, est prévue suffisante pour qu'au moins un module optique puissent être enroulé sur plusieurs tours sans pour autant qu'il se chevauche. De tels chevauchements pourraient en effet abîmer le module optique et/ou nuire à la transmission d'information dans un tel module optique ainsi enroulé.

Les moyens de blocage comprennent par ailleurs des premiers moyens d'attache 20, 21 au boîtier 2 du câble C passé à travers l'orifice 8.

Les premiers moyens d'attache 20, 21 comprennent une partie fixe 20 solidaire faisant saillie depuis une face interne 42 de la base 4, en une position de la base 4 qui est adjacente à l'orifice 8.

Les premiers moyens d'attache 20, 21 comprennent par ailleurs une partie amovible 21 adaptée pour être attachée à la partie fixe 20 avec des vis ou d'autres organes équivalents.

Lorsque la partie fixe 20 et la partie amovible 21 sont fixés l'un à l'autre avec les vis ils forment ensemble une pince pour maintenir le câble C fixe par rapport à la base 4.

Les moyens de blocage comprennent par ailleurs des deuxièmes moyens d'attache 28, 29 au boîtier 2 du câble C passé à travers l'orifice 10.

De façon similaire aux premiers moyens d'attache 20, 21, les deuxième moyens d'attache 28, 29 comprennent une partie fixe 28 solidaire faisant saillie depuis la face interne 42 de la base 4, en une position de la base 4 qui est adjacente à l'orifice 10.

Les deuxièmes moyens d'attache 28, 29 comprennent par ailleurs une partie amovible 29 adaptée pour être attachée à la partie fixe 28 avec des vis ou d'autres organes équivalents.

Lorsque la partie fixe 28 et la partie amovible 29 sont fixés l'un à l'autre avec les vis ils forment ensemble une pince pour maintenir le câble C fixe par rapport à la base 4.

Les moyens de blocage de la gaine G par rapport au module comprennent en outre un organe 44 formant une pince.

L'organe formant une pince 44 est agencé en aval du support d'enroulement 14. Dans le présent texte, les termes « amont » et « aval » se réfèrent au sens de parcours du module M1 depuis l'intérieur du câble vers l'extérieur du câble. Le terme « aval » signifie donc que l'organe formant une pince 44 est agencé de sorte à pincer une portion du module plus éloignée du câble C que la portion du module enroulée autour du support d'enroulement 14.

Lorsqu'un effort de traction est exercé sur le module depuis l'intérieur du câble C, une grande partie de cet effort est absorbée par le support d'enroulement 14. Une petite partie de cet effort est transmis à l'organe 44 en aval, qui l'absorbe.

L'organe formant une pince 44 est par ailleurs agencé en amont de l'orifice 12 de dérivation.

L'organe 44 est fixé à la base 4 du boîtier 2. Cet organe 44 formant une pince est disposé entre l'orifice de dérivation 12 et le support d'enroulement 14. L'organe 44 permet d'améliorer l'effet cabestan produit par le support d'enroulement 14 agencé en amont.

L'organe formant pince 44 comprend un canal pour recevoir le module à pincer. Ce canal est par exemple orienté tangentiellement à la surface d'enroulement du support d'enroulement, de sorte que la partie du module se trouvant entre le support d'enroulement et l'organe formant une pince 44 demeure rectiligne même lorsque le module est soumis à un effort de traction depuis l'intérieur du câble. Une telle orientation de canal permet d'éviter une flexion du module entre le support 14 et l'organe 44 suscitée par l'effort de traction exercé sur le module depuis l'intérieur du câble C. De telles flexions sont en effet susceptibles d'endommager le module pincé et/ou de nuire à la propagation d'un signal optique véhiculé par le module pincé.

La pince d'attache 44 peut comprendre une surface de pincement constituée de feutre, de façon à ne pas blesser le module optique pincé.

Le dispositif 1 de dérivation peut également comprendre un tube de protection 13. Dans ce cas, l'orifice 12 de dérivation n'est pas directement formé dans les surfaces 40 et 60, mais est formé à une première extrémité de ce tube 13, lequel est positionné entre les surfaces 40 et 60. Le tube de protection 13 fait saillie vers l'extérieur du boitier 2.

Le tube de protection 13 présente également une deuxième extrémité opposée à la première extrémité, la deuxième extrémité présentant un orifice débouchant dans le logement interne du boîtier.

Le tube de protection 13 peut être réalisé dans un matériau rigide ou former une gaine souple. Il permet de protéger le module extrait de la gaine G et débouchant hors du boîtier par l'orifice 12 de dérivation.

Le dispositif 1 de dérivation comprend par ailleurs des moyens d'attache 34, 36 au boîtier 2 du tube de protection 13.

Les moyens d'attache 34, 36 comprennent une partie fixe 34 solidaire faisant saillie depuis la face interne 42 de la base 4, en une position de la base 4 qui est adjacente à l'orifice de dérivation 12.

Les troisièmes moyens d'attache 34, 36 comprennent par ailleurs une partie amovible 36 adaptée pour être attachée à la partie fixe avec des vis ou d'autres organes équivalents.

Lorsque la partie fixe 34 et la partie amovible 36 sont fixés l'un à l'autre avec les vis, ils forment ensemble une pince pour attacher le tube de protection 13 à la base 4.

Les moyens d'attache 34, 36 sont de forme similaire aux moyens 20, 21 et 28, 29 ; cependant, le diamètre du passage qu'ils définissent peut être prévu plus petit que celui des moyens 20, 21 et 28, 29, de façon à enserrer le tube de protection 13, lequel protège un module optique, et présente un diamètre plus petit que celui de la gaine G.

Le dispositif 1 de dérivation comprend par ailleurs des moyens d'étanchéité adaptés pour isoler le logement interne du boîtier 2 contre l'humidité et la poussière.

Les moyens d'étanchéité comprennent un joint 7 d'étanchéité qui est appliqué sur l'une et/ou l'autre des deux surfaces complémentaires de la base 4 et du couvercle 6.

Les moyens d'étanchéité du dispositif 1 comprennent en outre une mâchoire d'étanchéité 16 formée dans la base 4, et une mâchoire d'étanchéité 18 complémentaire de la mâchoire d'étanchéité 16, formée dans le couvercle 6, les mâchoires 16 et 18 étant ménagées au niveau de l'orifice 8.

Les deux mâchoires 16 et 18 sont agencées pour enserrer ou pincer le câble C, et assurer une étanchéité entre le logement interne du boîtier et l'extérieur du boîtier 2, lorsque le boîtier 2 est refermé. Les deux mâchoires 16 et 18 sont prévues dans un matériau étanche à l'humidité et aux poussières, par exemple identique au matériau du joint 7.

Les moyens d'étanchéité du dispositif 1 comprennent en outre une mâchoire d'étanchéité 22 formée dans la base 4, et une mâchoire d'étanchéité 18 complémentaire de la mâchoire d'étanchéité 24, formée dans le couvercle 6, les mâchoires 22 et 24 étant ménagées au niveau de l'orifice 10.

Hormis sa position, la paire de mâchoires 22, 24 est identique à la paire de mâchoires 16, 18.

Les moyens d'étanchéité du dispositif 1 comprennent en outre une mâchoire d'étanchéité 30 formée dans la base 4, et une mâchoire d'étanchéité 32 complémentaire de la mâchoire d'étanchéité 24, formée dans le couvercle 6, les mâchoires 30 et 32 étant formées au niveau de l'orifice de dérivation 12.

Lorsque le boîtier 2 est refermé, le joint 7 et les mâchoires 16, 18, 22, 24, 30, 32 définissent un périmètre d'étanchéité pour le logement, ce périmètre n'étant interrompu que par les trois orifices 8, 10 et 12. De la sorte, quand un câble est passé à travers les orifices 8 et 10, et qu'un module optique est passé à travers l'orifice de dérivation 12, le logement interne est maintenu parfaitement étanche par rapport à l'extérieur du boîtier 2.

*Installation du dispositif 1 et dérivation d'un module optique*

Il va maintenant être décrit un procédé de dérivation du câble optique C, au moyen du dispositif de dérivation 1.

On considère que le câble C est déjà fixé à un poteau planté dans le sol; le câble C est alors un câble aérien. Les moyens de fixation du câble au poteau sont conventionnels : on pourra par exemple utiliser des pinces d'ancrages connues de l'homme du métier.

Un opérateur attache la base 4 du boîtier 2 au poteau, à hauteur du câble C, à l'aide de moyens d'attache appropriés.

Le boîtier est positionné de façon à ce que l'orifice de dérivation soit dirigé vers le sol, et la charnière 5 vers le ciel.

L'opérateur place le boîtier dans sa position ouverte en relevant le couvercle 6 vers le haut, et positionne le câble C contre la base 4 du boîtier 2. Plus précisément, il positionne le câble C sur les mâchoires 16 et 22, ainsi que sur les parties fixes 20 et 28 des moyens d'attache formés dans la base 4.

L'opérateur visse ensuite les parties amovibles 21 et 29 sur les parties fixes correspondantes 20 et 28. A ce stade, le câble C est maintenu fixe par rapport à la base 4.

L'opérateur incise la gaine du câble C de façon à former la fenêtre d'accès F aux modules optiques que renferme le câble C. Bien entendu, cette étape de formation de la fenêtre F peut être réalisée préalablement dans le câble C avant fixation du boîtier au poteau, pourvu que la longueur de la fenêtre soit prévue suffisamment courte pour être *in fine* entièrement contenue dans le boîtier 2.

La fenêtre d'accès F a vocation à demeurer permanente, en vue de dérivations des modules optiques du câble au niveau du poteau et notamment de la dérivation du module optique M1. On parle alors d'un câble C aérien à accessibilité permanente.

L'opérateur localise et extrait une portion d'extrémité du module optique M1 du câble C hors de la gaine.

L'opérateur enroule le module optique M1 autour du support d'enroulement 14 au moins sur un tour. Le support d'enroulement produit un effet de cabestan qui bloque le module optique M1 extrait par rapport à la gaine du câble C, la gaine étant maintenue fixe par rapport au boîtier.

De préférence, l'opérateur enroule consécutivement trois tours de module optique extrait M1 autour du support d'enroulement 14 pour un meilleur blocage, et sans chevauchement pour éviter d'abîmer le module.

Après cette étape d'enroulement, une portion d'extrémité libre du module optique M1 se trouve entre le support d'enroulement 14 et l'orifice de dérivation 12.

L'opérateur positionne et fait pincer le module optique par l'organe 44, ce qui permet de maintenir le bon positionnement du module sur le support d'enroulement 14.

L'opérateur fait par ailleurs passer la portion d'extrémité d'un autre module M2 à travers le tube de protection 13, depuis l'orifice de dérivation 12 vers le logement interne du boîtier 2.

L'opérateur raccorde ensuite l'extrémité du module optique M1 extrait puis bloqué par enroulement, au module optique M2 passé à travers le tube de protection 13 et débouchant également dans le logement interne. De la sorte, la zone de raccordement E entre le module optique M1 extrait et l'autre module optique M2 est confinée à l'intérieur du boîtier 2 et sera protégée des agressions extérieures après fermeture du boîtier 2.

Le module optique M1 extrait contient au moins une fibre optique, de même que le module optique passé à travers l'orifice de dérivation 12.

Le raccordement entre les deux modules optiques M1, M2 au niveau de la zone E est effectué fibre à fibre, c'est-à-dire qu'au moins une fibre optique du module optique extrait est raccordée à au moins une fibre optique de l'autre module optique.

Le raccordement entre deux fibres peut être mis en oeuvre par épissurage mécanique ou par soudure.

Alternativement, un connecteur optique (non représenté en figure 1) est fixé à l'extrémité libre du module optique M1 extrait et à une extrémité libre de l'autre module optique M2, le connecteur optique assurant ainsi une fonction d'interconnexion entre les deux modules optique M1 et M2, fibre par fibre.

En variante, l'opérateur peut faire ressortir le module optique M1 extrait par l'orifice de dérivation 12, puis refermer le boîtier 2. Le raccordement avec un autre module optique M2, ou bien un autre équipement, pourra être effectué alors à l'extérieur du dispositif 1.

Lors de l'allongement du câble C et des effets de traction induits sur les modules optiques qu'il contient, le module dérivé M1 serrera le support d'enroulement 14 et ne pourra pas être consommé par le câble C, c'est-à-dire se rétracter à l'intérieur de la gaine du câble C : il s'allongera de la même façon que les autres modules en passage.

*Autres variantes de réalisation*

Dans le mode de réalisation de dispositif 1 qui a été présenté ci-dessus, l'orifice de dérivation 12 constitue une interface agencée pour permettre une communication entre la portion du module qui a été extraite hors du câble via la fenêtre d'accès et un équipement externe au boîtier.

En variante, le dispositif ne comprend pas d'orifice 12 par lequel est passé un module optique M1 ou M2, mais comprend un convertisseur optoélectronique qui assure cette fonction d'interface entre l'intérieur et l'extérieur du boîtier.

Le convertisseur optoélectronique est positionné dans le boîtier, entre l'extérieur du boîtier et le logement interne.

Le convertisseur optoélectronique comprend une première face donnant dans le logement interne, et qui est pourvue d'un connecteur optique auquel l'extrémité du module optique extrait peut être raccordée.

Le convertisseur optoélectronique comprend en outre une deuxième face donnant vers l'extérieur du boîtier, et pourvue d'un connecteur électrique, auquel un câble électrique peut être raccordé, par exemple un câble à conducteurs en cuivre.

Le convertisseur optoélectronique est adapté pour transformer un signal optique reçu par le connecteur optique en un signal électrique, et émettre le signal électrique dans le connecteur électrique.

Le convertisseur optoélectronique est également adapté pour transformer un signal électrique reçu par le connecteur électrique en un signal optique, et émettre le signal optique dans le connecteur optique.

Le dispositif 1 de dérivation peut faire l'objet d'autres variantes.

On peut notamment dériver un ou plusieurs modules optiques, par exemple au moyens de plusieurs supports d'enroulements 14 empilés les uns sur les autres. On peut alors envisager plusieurs sorties de dérivation des modules dérivés du boîtier 2.

L'organe formant une pince 44 précédemment décrit et illustré sur la figure 1 est agencé en aval du support d'enroulement 14.

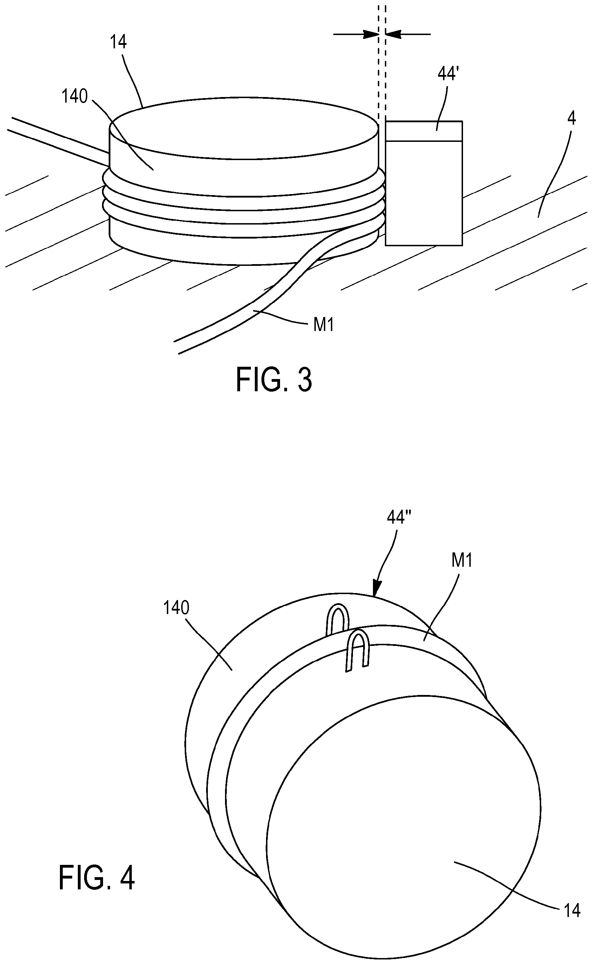

Dans une variante illustrée en **figure 3,** le dispositif de dérivation 1 comprend un organe formant une pince 44' qui est agencé au niveau du support d'enroulement 14.

L'organe formant une pince 44' comprend un élément présentant une surface de pinçage en regard de la surface d'enroulement 140 du support d'enroulement 14. L'élément est agencé par rapport au support d'enroulement

14 de sorte que la portion du module enroulée autour du support d'enroulement 14 soit pincée entre la surface d'enroulement 14 et la surface de pinçage (l'effet de pincement étant représenté par les deux flèches illustrées sur la figure 3).

L'organe formant une pince 44' est alors formé en partie par le support d'enroulement 14 lui-même ; l'encombrement des moyens de blocage du module est ainsi réduit.

L'élément est par exemple en mousse, pour ne pas abîmer le module pincé.

Dans une autre variante représentée en figure 4, le dispositif de dérivation 1 comprend un organe formant une pince 44" qui fait saillie depuis la surface d'enroulement 140.

L'organe formant une pince 44" peut ainsi comprendre au moins une paire de plots espacés l'un de l'autre et faisant saillie depuis la surface d'enroulement 140, de sorte que le module enroulé soit pincé entre les deux plots.

Plusieurs paires de plots en saillie peuvent être prévus. Ainsi, si le module M1 est enroulé sur plusieurs tours autour du support d'enroulement 14, le module enroulé peut être pincé plusieurs fois consécutivement ce qui améliore le maintien du module M1 pincé.

Les différentes variantes d'organes 44, 44' et 44" peuvent être combinées.

**Revendications**

1. Dispositif (1) de dérivation pour un câble optique (C) comprenant une gaine (G), au moins un module optique (M1) entouré par la gaine (G) et une fenêtre (F) d'accès au module optique (M1) formée dans la gaine (G), le dispositif (1) comprenant :

   • un boîtier (2) présentant :

      ◦ un orifice d'entrée (8) et un orifice de sortie (10) agencés pour permettre une traversée du boîtier (2) par le câble de sorte qu'une portion du câble comprenant la fenêtre (F) d'accès se trouve logée à l'intérieur du boîtier (2),
      ◦ une interface de dérivation (12) entre l'intérieur et l'extérieur du boîtier (2), agencée pour permettre une communication entre la portion du module qui a été extraite hors du câble via la fenêtre (F) d'accès et un équipement externe au boîtier (2), et

   • des moyens de blocage de la portion du module optique (M1) extraite par rapport à la gaine (G) pour empêcher un déplacement de la portion du module extraite vers l'intérieur de la gaine (G), les moyens de blocage comprenant :

      ◦ au moins un support d'enroulement (14) de la portion du module optique (M1) extraite, **caractérisé en ce que** les moyens de blocage comprennent aussi
      ◦ un organe formant une pince (44, 44', 44") agencé pour pincer une portion du module optique extrait qui est enroulée autour du support d'enroulement (14) ou une portion du module extrait qui est en aval de la portion enroulée autour du support d'enroulement (14).

2. Dispositif (1) de dérivation selon la revendication précédente, comprenant en outre des moyens de fixation du câble par rapport au boîtier, et dans lequel le support d'enroulement (14) et l'organe formant une pince (44, 44', 44") sont fixes par rapport au boîtier (2).

3. Dispositif (1) de dérivation selon l'une des revendications précédentes, dans lequel le support d'enroulement (14) présente une surface d'enroulement (140) depuis laquelle l'organe formant une pince (44") fait saillie.

4. Dispositif (1) de dérivation selon l'une des revendications précédentes, dans lequel l'organe formant une pince (44') présente une surface de pinçage en regard d'une surface d'enroulement (140) du support d'enroulement (14), l'organe formant pince (44') étant agencé par rapport au support d'enroulement (14) de sorte que la portion du module enroulée autour du support d'enroulement soit pincée entre la surface d'enroulement (140) et la surface de pinçage.

5. Dispositif (1) de dérivation selon la revendication précédente, dans lequel la surface de pinçage est réalisée en mousse ou en feutre.

6. Dispositif (1) de dérivation selon l'une des revendications précédentes, dans lequel l'organe formant pince (44, 44', 44") comprend un canal pour recevoir le module à pincer, le canal étant orienté tangentiellement à une surface d'enroulement (140) du support d'enroulement (14).

7. Dispositif (1) de dérivation selon l'une des revendications précédentes, dans lequel l'interface de dérivation (12) comprend un orifice de dérivation agencé pour faire ressortir du boîtier (2) la portion du module qui a été extraite (M1), ou bien pour faire ressortir du boîtier (2) un autre module optique (M2) auquel la portion du module extraite a été raccordée.

8. Dispositif (1) de dérivation selon l'une des revendications précédentes, dans lequel le support d'enroulement (14) présente une surface d'enroulement (140) formée au moins partiellement d'élastomère.

9. Système comprenant :

• un dispositif (1) de dérivation selon l'une des revendications précédentes, et
• un câble optique (C) comprenant une gaine (G), un module optique (M1) entouré par la gaine (G) et une fenêtre (F) d'accès au module optique (M1) formée dans la gaine (G),

dans lequel le câble (C) traverse le boîtier (2) via les orifices d'entrée (8) et de sortie (10), une portion du câble comprenant la fenêtre (F) d'accès étant logée dans le boîtier (2).

10. Système selon la revendication précédente, dans lequel le câble (C) comprend une pluralité de modules optiques s'étendant en long.

11. Système selon l'une des revendications 9 à 10, dans lequel le module optique (M1) est enroulé autour du support d'enroulement consécutivement sur au moins un tour, préférentiellement sur trois tours.

12. Système selon la revendication précédente, dans lequel le module optique (M1) est enroulé autour du support d'enroulement (14) sans se chevaucher lui-même.

13. Procédé de dérivation pour un câble optique (C) comprenant une gaine (G), un module optique (M1) entouré par la gaine (G) et une fenêtre (F) d'accès au module optique (M1) formée dans la gaine (G), au moyen d'un dispositif (1) de dérivation comprenant un boîtier (2), le procédé comprenant des étapes de:

• faire traverser le boîtier (2) du dispositif (1) par le câble via des orifices d'entrée (8) et de sortie (10) du boîtier (2), de sorte qu'une portion du câble comprenant la fenêtre (F) d'accès se trouve logée dans le boîtier (2),
• extraire une portion du module optique (M1) hors du câble via la fenêtre (F) d'accès, et
• bloquer la portion du module optique (M1) extraite par rapport à la gaine (G) pour empêcher un déplacement de la portion du module extraite vers l'intérieur de la gaine (G), le blocage comprenant :

◦ l'enroulement de la portion du module extraite autour d'un support d'enroulement (14), et
◦ le pincement, au moyen d'un organe formant une pince, de la portion du module enroulée autour du support d'enroulement ou d'une portion du module en aval de la portion enroulée.

14. Procédé selon la revendication précédente, dans lequel le câble optique (C) est un câble aérien, et comprenant une fixation du boîtier (2) à un poteau.

**Patentansprüche**

1. Abzweigvorrichtung (1) für ein Lichtleitkabel (C), einen Mantel (G), zumindest ein optisches Modul (M1), das vom Mantel (G) umgeben ist, und ein Fenster (F) für den Zugriff auf das optische Modul (M1) umfassend, das im Mantel (G) gebildet wird, wobei die Vorrichtung (1) umfasst:

- ein Gehäuse (2), aufweisend:

-- eine Einlassöffnung (8) und eine Auslassöffnung (10), angeordnet, um eine Durchquerung des Gehäuses (2) durch das Kabel zu ermöglichen, sodass sich ein Abschnitt des Kabels, das Fenster (F) für den Zugriff umfassend, im Inneren des Gehäuses (2) untergebracht befindet,
-- eine Abzweigschnittstelle (12) zwischen dem Inneren und dem Äußeren des Gehäuses (2), angeordnet, um eine Verbindung zwischen dem Abschnitt des Moduls, der über das Fenster (F) aus dem Kabel heraus entnommen wurde, und einer externen Ausrüstung des Gehäuses zu ermöglichen, und

- Mittel zum Blockieren des Abschnitts des optischen Moduls (M1), der im Verhältnis zum Mantel (G) entnommen wird, um eine Verschiebung des entnommenen Abschnitts des Moduls ins Innere des Mantels (G) zu verhindern, wobei die Mittel zum Blockieren umfassen:

-- zumindest einen Wicklungsträger (14) des entnommenen Abschnitts des optischen Moduls (M1), **dadurch gekennzeichnet, dass** die Mittel zum Blockieren auch umfassen
-- ein eine Klemme (44, 44', 44") bildendes Organ, angeordnet, um einen Abschnitt des entnommenen optischen Moduls zu klemmen, der um den Wicklungsträger (14) gewickelt ist, oder einen Abschnitt des entnommenen Moduls, der dem um den Wicklungsträger (14) gewickelten Abschnitt nachgeordnet ist.

2. Abzweigvorrichtung (1) nach dem vorhergehenden Anspruch, darüber hinaus Mittel zur Befestigung des Kabels im Verhältnis zum Gehäuse umfassend, und wobei der Wicklungsträger (14) und das eine Klemme (44, 44', 44") bildende Organ im Verhältnis zum Gehäuse feststehend sind.

3. Abzweigvorrichtung (1) nach einem der vorhergehenden Ansprüche, wobei der Wicklungsträger (14) eine Wicklungsfläche (140) aufweist, aus der das eine Klemme (44") bildende Organ vorsteht.

4. Abzweigvorrichtung (1) nach einem der vorhergehenden Ansprüche, wobei das eine Klemme (44') bildende Organ eine Klemmfläche gegenüber einer Wicklungsfläche (140) des Wicklungsträgers (14) aufweist, wobei das eine Klemme (44') bildende Organ derart im Verhältnis zum Wicklungsträger (14) angeordnet ist, dass der Abschnitt des Moduls, der um den Wicklungsträger gewickelt ist, zwischen der Wicklungsfläche (140) und der Klemmfläche geklemmt wird.

5. Abzweigvorrichtung (1) nach dem vorhergehenden Anspruch, wobei die Klemmfläche aus Schaumstoff oder aus Filz gefertigt ist.

6. Abzweigvorrichtung (1) nach einem der vorhergehenden Ansprüche, wobei das eine Klemme (44, 44', 44") bildende Organ einen Kanal zum Aufnehmen des zu klemmenden Moduls umfasst, wobei der Kanal tangential zu einer Wicklungsfläche (140) des Wicklungsträgers (14) ausgerichtet ist.

7. Abzweigvorrichtung (1) nach einem der vorhergehenden Ansprüche, wobei die Abzweigschnittstelle (12) eine Abzweigöffnung umfasst, die angeordnet ist, um aus dem Gehäuse (2) den Abschnitt des Moduls hervortreten zu lassen, der entnommen (M1) worden ist, oder aber um aus dem Gehäuse (2) ein anderes optisches Modul (M2) hervortreten zu lassen, an dem der entnommene Abschnitt des Moduls angeschlossen wurde.

8. Abzweigvorrichtung (1) nach einem der vorhergehenden Ansprüche, wobei der Wicklungsträger (14) eine Wicklungsfläche (140) aufweist, die zumindest teilweise aus Elastomer gebildet wird.

9. System, umfassend:

- eine Abzweigvorrichtung (1) nach einem der vorhergehenden Ansprüche, und
- ein Lichtleitkabel (C), einen Mantel (G), ein optisches Modul (M1), das vom Mantel (G) umgeben ist, und ein Fenster (F) für den Zugriff auf das optische Modul (M1) umfassend, das im Mantel (G) gebildet wird,

wobei das Kabel (C) das Gehäuse (2) über die Einlass- (8) und Auslassöffnungen (10) durchquert, wobei ein Abschnitt des Kabels das Fenster (F) für den Zugriff umfasst, das im Gehäuse (2) untergebracht ist.

10. System nach dem vorhergehenden Anspruch, wobei das Kabel (C) eine Vielzahl von optischen Modulen umfasst, die sich in der Länge erstrecken.

11. System nach einem der Ansprüche 9 bis 10, wobei das optische Modul (M1) konsekutiv zumindest um eine Umdrehung, vorzugsweise um drei Umdrehungen, um den Wicklungsträger gewickelt ist.

12. System nach dem vorhergehenden Anspruch, wobei das optische Modul (M1) um den Wicklungsträger (14) gewickelt ist, ohne sich selbst zu überlappen.

13. Abzweigverfahren für ein Lichtleitkabel (C), einen Mantel (G), ein optisches Modul (M1), das vom Mantel (G) umgeben ist, und ein Fenster (F) für den Zugriff auf das optische Modul (M1) umfassend, das im Mantel (G) gebildet wird, anhand einer Abzweigvorrichtung (1), ein Gehäuse (2) umfassend, wobei das Verfahren die Schritte umfasst:

- das Gehäuse (2) der Vorrichtung (1) durch das Kabel über die Einlass- (8) und Auslassöffnungen (10) des Gehäuses (2) durchqueren lassen, sodass sich ein Abschnitt des das Fenster (F) für den Zugriff umfassenden Kabels im Gehäuse (2) untergebracht befindet,
- einen Abschnitt des optischen Moduls (M1) über das Fenster (F) für den Zugriff aus dem Kabel heraus entnehmen, und
- den entnommenen Abschnitt des optischen Moduls (M1) im Verhältnis zum Mantel (G) blockieren, um eine Verschiebung des entnommenen Abschnitts des Moduls ins Innere des Mantels (G) zu verhindern, wobei die Blockierung umfasst:

-- das Wickeln des entnommenen Abschnitts des Moduls um einen Wicklungsträger (14), und
-- das Klemmen anhand eines eine Klemme bildenden Organs des Abschnitts des Moduls, der um den Wicklungsträger gewickelt ist, oder eines Abschnitts des Moduls, der dem gewickelten Abschnitt nachgeordnet ist.

14. Verfahren nach dem vorhergehenden Anspruch, wobei das Lichtleitkabel (C) eine Freileitung ist, und eine Befestigung des Gehäuses (2) an einem Mast umfassend.

## Claims

1. Device (1) for deriving an optical cable (C) comprising a sheath (G), at least one optical module (M1) surrounded by the sheath (G) and a window (F) for access to the optical module (M1) formed in the sheath (G), wherein the device (1) comprises:

- a housing (2) having:

-- an inlet port (8) and an outlet port (10) arranged to allow a passage of the housing (2) by the cable such that the cable portion comprising the window (F) for access is housed inside the housing (2),
-- a derivation interface (12) between the inside and the outside of the housing (2), arranged to allow communication between the portion of the module which has been extracted out of the cable through the window (F) for access and a piece of equipment external to the housing (2), and

- means for blocking the portion of the optical module (M1) extracted with respect to the sheath (G) to prevent movement of the module extracted portion inwardly of the sheath (G), wherein the means comprise:

-- at least one winding support (14) of the portion of the optical module (M1) extracted, **characterised in that** the means also comprise
-- a member forming a clamp (44, 44', 44") arranged to pinch a portion of the optical module extracted which is wound around the carrier winding (14) or a portion of the module extracted which is downstream of the portion wound around the winding support (14).

2. Device (1) for deriving as claimed in the preceding claim, further comprising means for fastening the cable with respect to the housing, and wherein the winding support (14) and the member forming a clamp (44, 44', 44") are fixed with respect to the housing (2).

3. Device (1) for deriving according to one of the preceding claims, wherein the winding support (14) has a winding surface (140) from which the member forming a clamp (44") protrudes.

4. Device (1) for deriving according to one of the preceding claims, wherein the member forming a clamp (44') has a pinching surface facing a winding surface (140) of the winding support (14), with the member forming a clamp (44') being arranged with respect to the winding support (14) in such a way that the portion of the module wound around the winding support is pinched between the winding surface (140) and the pinching surface.

5. Device (1) for deriving as claimed in the preceding claim, wherein the pinching surface is made of foam or of felt.

**6.** Device (1) for deriving according to one of the preceding claims, wherein the member forming a clamp (44, 44', 44") comprises a channel for receiving the module to be pinched, with the channel being tangentially directed to a winding surface (140) of the winding support (14).

**7.** Device (1) for deriving according to one of the preceding claims, wherein the derivation interface (12) comprises a port for deriving arranged to have the portion of the module that was extracted (M1) exit from the housing (2), or to have another optical module (M2) to which the portion of the module extracted has been connected exit from the housing (2).

**8.** Device (1) for deriving according to one of the preceding claims, wherein the winding support (14) has a winding surface (140) formed at least partially of elastomer.

**9.** System comprising:

- a device (1) for deriving according to one of the preceding claims, and
- an optical cable (C) comprising a sheath (G), an optical module (M1) surrounded by the sheath (G) and a window (F) for access to the optical module (M1) formed in the sheath (G),

wherein the cable (C) passes through the housing (2) via the input (8) and output (10) ports, with a portion of the cable comprising the window (F) for access being housed inside the housing (2).

**10.** System as claimed in the preceding claim, wherein the cable (C) comprises a plurality of optical modules extending in length.

**11.** System according to one of claims 9 to 10, wherein the optical module (M1) is wound around the winding support consecutively on at least one turn, preferentially over three turns.

**12.** System as claimed in the preceding claim, wherein the optical module (M1) is wound around the winding support (14) without overlapping itself.

**13.** Method for deriving an optical cable (C) comprising a sheath (G), an optical module (M1) surrounded by the sheath (G) and a window (F) for access to the optical module (M1) formed in the sheath (G), by means of a device (1) for deriving comprising a housing (2), with the method comprising the steps of:

- having the housing (2) of the device (1) passed through by the cable via input (8) and output (10) ports of the housing (2), in such a way that a portion of the cable comprising the window (F) for access is housed inside the housing (2),
- extracting a portion of the optical module (M1) out of the cable via the window (F) for access, and
- blocking the portion of the optical module (M1) extracted with respect to the sheath (G) to prevent movement of the module extracted portion inwardly of the sheath (G), with the blocking comprising:

-- the winding of the portion of the module extracted around a winding support (14), and
-- the clamping, by means of a member forming a clamp, of the portion of the module wound around the winding support or a portion of the module downstream of the wound portion.

**14.** Method as claimed in the preceding claim, wherein the optical cable (C) is an overhead cable, and comprising a fastening of the housing (2) to a post.

FIG. 1

FIG. 2

FIG. 3

FIG. 4

## RÉFÉRENCES CITÉES DANS LA DESCRIPTION

**Documents brevets cités dans la description**

- FR 2810747

- WO 2007113522 A